**Europäisches Patentamt**

(19) **European Patent Office**

**Office européen des brevets**

(11) Veröffentlichungsnummer: **0 110 336**
**B1**

(12) **EUROPÄISCHE PATENTSCHRIFT**

(45) Veröffentlichungstag der Patentschrift:
28.01.87

(51) Int. Cl.⁴: **F 16 K 11/06**, F 16 K 27/04,
F 16 K 11/074

(21) Anmeldenummer: 83111796.5

(22) Anmeldetag: 25.11.83

(54) **Mischventil.**

(30) Priorität: 29.11.82 DE 3244118

(43) Veröffentlichungstag der Anmeldung:
13.06.84 Patentblatt 84/24

(45) Bekanntmachung des Hinweises auf die Patenterteilung:
28.01.87 Patentblatt 87/5

(84) Benannte Vertragsstaaten:
AT BE CH DE FR GB IT LI NL SE

(56) Entgegenhaltungen:
DE - A - 1 550 357
DE - A - 2 602 244
DE - A - 2 658 023
FR - A - 2 468 805
GB - A - 2 078 910
US - A - 2 908 293
US - A - 3 533 444
US - A - 3 667 503

(73) Patentinhaber: FRIEDRICH GROHE
ARMATURENFABRIK GmbH & CO, Hauptstrasse 137,
D-5870 Hemer 1 (DE)

(72) Erfinder: Herring, William Peter, Unter dem Asenberg 30,
D-5870 Hemer 1 (DE)
Erfinder: Kostorz, Jan Ryszard, Frhr. von Dücker
Strasse 2a, D-5750 Menden 2 (DE)

## Beschreibung

Die Erfindung betrifft ein Mischventil mit den im Oberbegriff des Anspruchs 1 angegebenen Merkmalen.

Ein Mischventil dieser Gattung ist aus der DE-A-26 58 023 bekannt. Bei dieser Ventilausbildung sind als Ventilorgane zwei Ventilscheiben aus Keramik in einem gesonderten Ventilgehäuse gelagert, das als eine Baueinheit in Sanitärarmaturen einfügbar ist, wobei eine feststehende Ventilscheibe mit Durchtrittsöffnungen durch Dichtungen mit den Zu- und Abflusskanälen dicht verbunden ist und die Dichtungen mittels einer zwischengelagerten Trägerplatte abgestützt sind. Bei dieser Ausbildung ist es erforderlich, den Dichtungen eine derart hohe Vorspannung zu geben, dass der maximal auftretende Druck in dem Medium von den Dichtungen sicher aufgenommen werden kann. Ausserdem treten unvermeidlich bei der Fertigung der Ventilscheiben bzw. Ventilorgane und den übrigen Einzelteilen Fertigungstoleranzen auf, wodurch noch zusätzlich eine erhöhte Anpressung der einzelnen Ventilbauteile auftreten kann. Durch diese relativ starke Anpressung wird eine Schwergängigkeit des Ventils verursacht. Ferner ist ein Eingriffmischventil (US-A-3 667 503) bekannt, bei dem die einzelnen Ventilelemente ohne kartuschenartiges Sondergehäuse in dem Armaturengehäuse angeordnet sind und bei dem zwischen der feststehenden Ventilscheibe und dem Armaturengehäuse zur Abdichtung der Zu- und Ablaufkanäle eine Platte mit an beiden Seiten rippenförmig vorstehenden Ringdichtungen zwischengelagert ist. Von den Ringdichtungen werden hierbei Fluidaufschlagflächen an der feststehenden Ventilscheibe umfasst, so dass die Ventilscheiben durch die Vorspannung bzw. Verformung der Dichtungen und dem herrschenden Fluiddruck aufeinandergepresst werden.

Der Erfindung liegt die Aufgabe zugrunde, für ein Mischventil mit in einem Kartuschengehäuse angeordneten, aufeinanderliegenden Verschlussglieder ein Dichtungsglied zu schaffen, welches einerseits eine sichere Abdichtung zwischen den Zu- und/oder Abflusskanälen des Ventilgehäuses und den Ventilorganen gewährleistet und andererseits nur die erforderliche Mindestanpresskraft für die Ventilorgane erzeugt, wobei ausserdem das Dichtungsglied so ausgebildet werden soll, dass die Fertigungstoleranzen der Ventilelemente bei relativ geringer Änderung der Anpresskraft kompensiert werden können.

Diese Aufgabe wird erfindungsgemäss durch die im kennzeichnenden Teil des Anspruchs 1 angegebenen Merkmale gelöst. Weitere Ausgestaltungen der Erfindung sind in den Ansprüchen 2 bis 7 angegeben.

Die durch die Erfindung erreichten Vorteile sind im wesentlichen darin zu sehen, dass die Abdichtung am Übergang zum Ventilorgan durch Lippendichtungen erfolgt, deren Position durch einen Anschlag im Gehäuse mit Hilfe der Trägerplatte bestimmt ist, so dass die minimale Anpresskraft der Ventilorgane durch die Umbiegung der Dichtlippen erfolgt und andererseits zur Abdichtung des allgemeinen Ventilgehäuses stärker verspannte Lippen- oder Wulstdichtungen vorgesehen werden können. Durch eine entsprechend starke Umbiegung können bei nur geringfügiger Änderung der Anpresskraft die Fertigungstoleranzen für die Ventilelemente ausgeglichen werden, wobei andererseits durch die von den Lippendichtungen umfassten Mediumsaufschlagflächen sichergestellt ist, dass bei erhöhten Drücken eine entsprechend verstärkte Anpresskraft für die Ventilorgane erzeugt wird und in diesem Falle auch die Dichtlippen entsprechend stärker in ihre Dichtposition gepresst werden, so dass auch bei erhöhten Drücken eine sichere Abdichtung gewährleistet ist.

Das Dichtungsglied kann vorteilhaft sowohl bei Ventilkartuschen, bei denen Durchtrittsöffnungen radial in einer Mantelfläche des Gehäuses angeordnet sind, als auch bei Ventilkartuschen, bei denen die Durchtrittsöffnungen an einer ebenen Stirnfläche ausgebildet sind, eingesetzt werden. Das Dichtungsglied ist hierbei jeweils für den Anwendungsfall entsprechend der Wandung gewölbt oder eben auszubilden. Durch die Anschlagausbildung in dem Gehäuse wird es ermöglicht, das Dichtungsglied nach der Montage der einzelnen Ventilglieder in das Gehäuse radial oder axial einzufügen, so dass die Ventilorgane zunächst lose in dem Gehäuse einmontiert werden können und danach das Dichtungsglied eingefügt werden kann, welches erst bei der Einmontage des in dem Gehäuse angeordneten Ventilbausatzes in dem eigentlichen Ventil die erforderliche Vorspannung erfährt.

Ausführungsbeispiele der Erfindung sind in der Zeichnung dargestellt und werden im folgenden näher beschrieben. Es zeigt

Figur 1 einen Teil einer sanitären Mischarmatur mit eingesetzter Ventilkartusche im Längsschnitt;

Figur 2 ein Dichtungsglied gemäss Figur 1 in vergrössertem Massstab in der Schnittebene II;

Figur 3 eine Seitenansicht des Dichtungsglieds gemäss Figur 2 in der Schnittebene III;

Figur 4 ein anderes Ausführungsbeispiel des Dichtungsgliedes für den Einsatz in einem Ventil gemäss Figur 1 in vergrössertem Massstab, geschnitten in der Ebene IV der Figur 5;

Figur 5 das Dichtungsglied gemäss Figur 4 in der Schnittebene V;

Figur 6 das Dichtungsglied gemäss Figur 4 in der Schnittebene VI;

Figur 7 ein weiteres Ausführungsbeispiel des Dichtungsgliedes in Draufsicht in vergrössertem Massstab, wie es bei einem Ventil gemäss Figur 1 eingesetzt werden kann;

Figur 8 das Dichtungsglied gemäss Figur 4 in der Schnittebene VIII;

Figur 9 das Dichtungsglied gemäss Figur 7 in der Schnittebene IX.

Der Einfachheit halber sind bei den Ausführungsbeispielen in der Zeichnung gleiche oder entsprechende Elemente mit jeweils gleichen Bezugszeichen versehen.

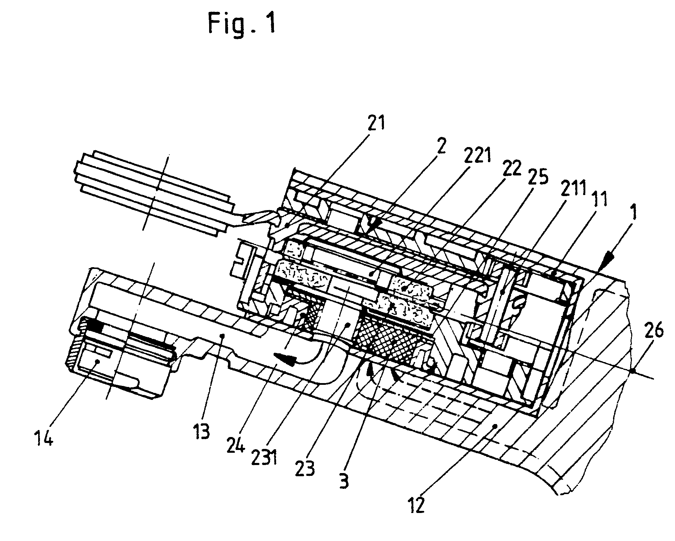

Bei der in der Figur 1 gezeigten Sanitärarmatur 1 ist in einer Lötbuchse 11 ein von einem Sondergehäuse gekapseltes Misch- und Mengenregulierventil angeordnet. In der Sanitärarmatur 1 sind Zulaufkanäle 12 für das warme und kalte Wasser ausgebildet und radial durch ein Gehäuse 2 den Ventilorganen 22 und 23 unter Zwischenschaltung eines Dichtungsgliedes 3 zugeführt. Das in dem Ventil gebildete Mischwasser wird ebenfalls radial durch das Dichtungsglied 3 herausgeführt und in der Sanitärarmatur einem Auslaufkanal 13 für Mischwasser zugeführt, von dem aus es durch ein Auslaufmundstück 14 ins Freie tritt.

In dem Gehäuse 2 ist parallel zur Mittelachse 26 ein als Keramikscheibe ausgebildetes, im wesentlichen unbeweglich gehaltertes Ventilorgan 23 mit Durchtrittsöffnungen für Kalt-, Warm- und Mischwasser vorgesehen, an dem als bewegliches Ventilorgan 22 eine weitere Keramikscheibe mit einem Misch- und Umlenkkanal 221 anliegt, welche von einem Mitnahmeglied 21 gehaltert und geführt ist. Das Mitnahmeglied 21 kann dabei von einem in der Zeichnung nicht dargestellten Betätigungshebel parallel zur Mittelachse 26 verschoben werden, wodurch die Gesamtdurchflussmenge des Mischventils bestimmt werden kann. Ausserdem kann mit dem beweglichen Ventilorgan 22 durch ein Verschwenken des Mitnahmegliedes 21 um einen Drehpunkt 211 das Mischungsverhältnis des zuströmenden kalten und warmen Wassers bestimmt werden.

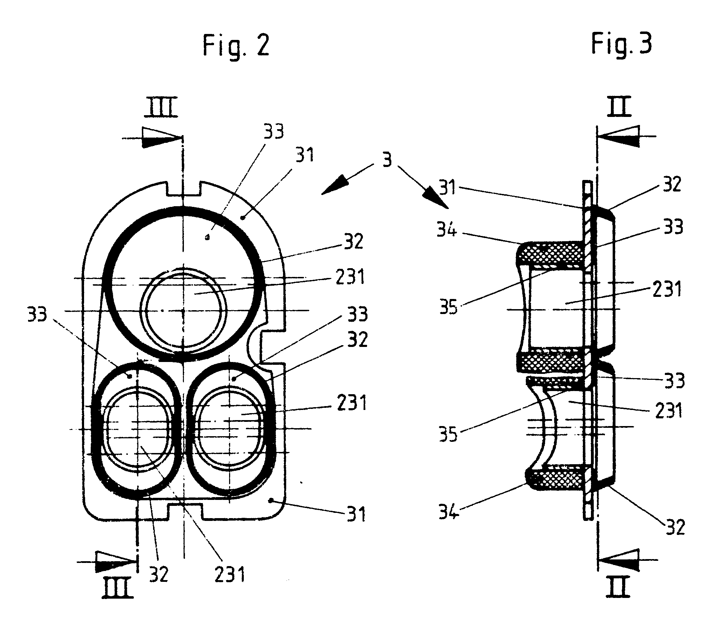

Die beiden Ventilorgane 22, 23 sind an ihren Berührungsflächen eben geschliffen, so dass sie wasserdicht aufeinanderliegen, wobei die erforderliche Mindestanpressung von einem Dichtungsglied 3, welches zwischen der Wandung der Lötbuchse 11 und dem unbeweglich gehalterten Ventilorgan 23 angeordnet ist und eine dichte Verbindung zwischen den Durchtrittsöffnungen in den Ventilorganen und den in der Sanitärarmatur 1 ausgebildeten Zu- und Auslaufkanälen 12, 13 herstellt. Das Dichtungselement ist in den Figuren 2 und 3 in vergrössertem Massstab dargestellt und besteht im wesentlichen aus einer Trägerplatte 31 mit Durchtrittsöffnungen 231, an dessen Flachseiten einerseits Lippendichtungen 32 ausgebildet sind und andererseits wulstförmige Dichtungen 34. Aus Stabilitätsgründen sind die Wulstdichtungen 34 von einem Formkörper 24 und lose eingelagerten Rohrstutzen 35 gegen radiale Verformung gestützt. Bei einem fertigmontierten Ventil wird das Dichtungsglied radial durch die wulstförmigen Dichtungen 34 in das Gehäuse 2 soweit eingedrückt, bis die Trägerplatte 31 an einem Anschlag 25 in dem Gehäuse 2 zur Anlage gelangt. In dieser Stellung liegen die Lippendichtungen 32 an dem feststehenden Ventilorgan 23 an und erzeugen durch eine entsprechende Umbiegung die erforderliche Mindestpresskraft für die Ventilorgane. Die Lippendichtungen sind hierbei mit nach innen geneigten Dichtlippen ausgebildet, so dass bei nur geringfügig ansteigenden Kräften eine Umbiegung entsprechend den durch Fertigungstoleranzen verursachten Massen der individuellen Ventileinzelteile erfolgen kann. Damit die erforderliche Anpresskraft der Ventilorgane dem herrschenden Flüssigkeitsdruck angepasst werden kann, umschliessen die Lippendichtungen 32 Fluidaufschlagflächen 33, an denen der herrschende Fluiddruck zur Wirkung gelangen kann und in Abhängigkeit von dem Fluiddruck eine entsprechende zusätzliche Anpresskraft für die Ventilorgane erzeugt wird. Die Lippendichtungen 32 sorgen dabei durch ihre nach innen geneigten Dichtlippen, dass diese entsprechend dem Druck stärker in ihre Dichtposition gepresst werden und somit eine dichte Verbindung gewährleisten. Durch den Anschlag 25, an dem die Trägerplatte 31 zur Anlage gelangt, ist ausserdem sichergestellt, dass die wulstförmigen Dichtungen 34 stärker verformt werden können, wobei deren Verformungskraft jedoch nicht an den Lippendichtungen 32 zur Wirkung gelangen kann, so dass die optimal erforderliche Anpresskraft für die Ventilorgane 22, 23 sichergestellt ist und somit ein Höchstmass von Leichtgängigkeit des Ventils geboten werden kann.

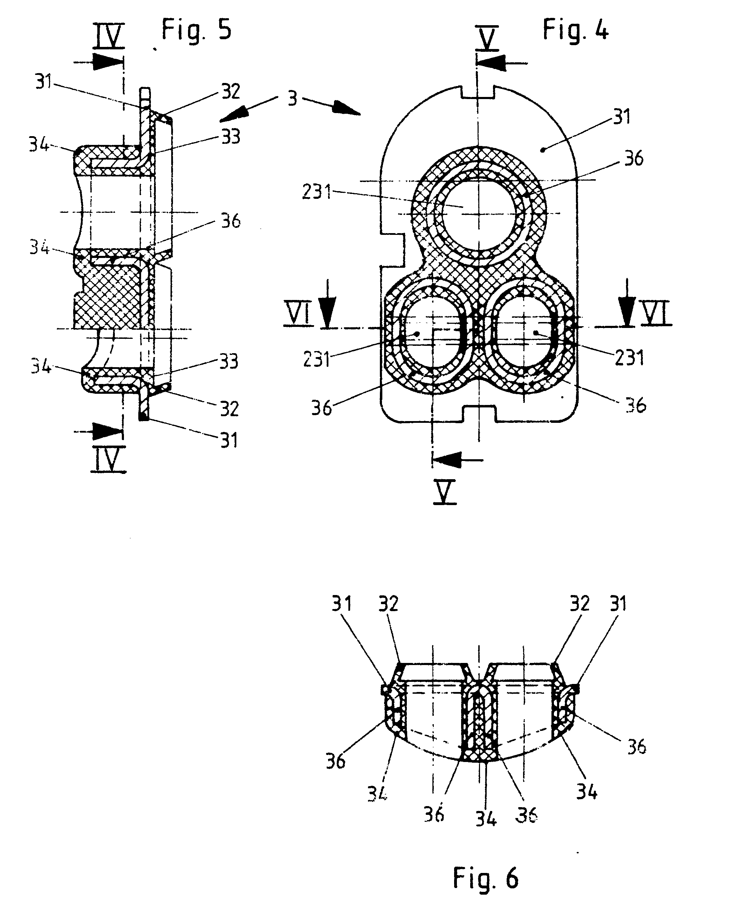

Die Figuren 4 bis 6 zeigen ein abgewandeltes Dichtungsglied 3, wobei der Bereich der wulstförmigen Dichtungen umgestaltet ist. Zur Formstabilität der Wulstdichtungen ist hierbei die Trägerplatte 31 durch einen Tiefziehvorgang mit angeformten Stützringen 36 versehen, wobei der Stützring insgesamt mit einem Elastomer umkleidet und mit dem Bereich der Lippendichtungen unmittelbar verbunden ist. Zur weiteren Abstützung ist ebenfalls ein Formkörper 24 vorgesehen. Im übrigen entspricht dieses Dichtungsglied 3 dem Ausführungsbeispiel gemäss Figur 2 und 3.

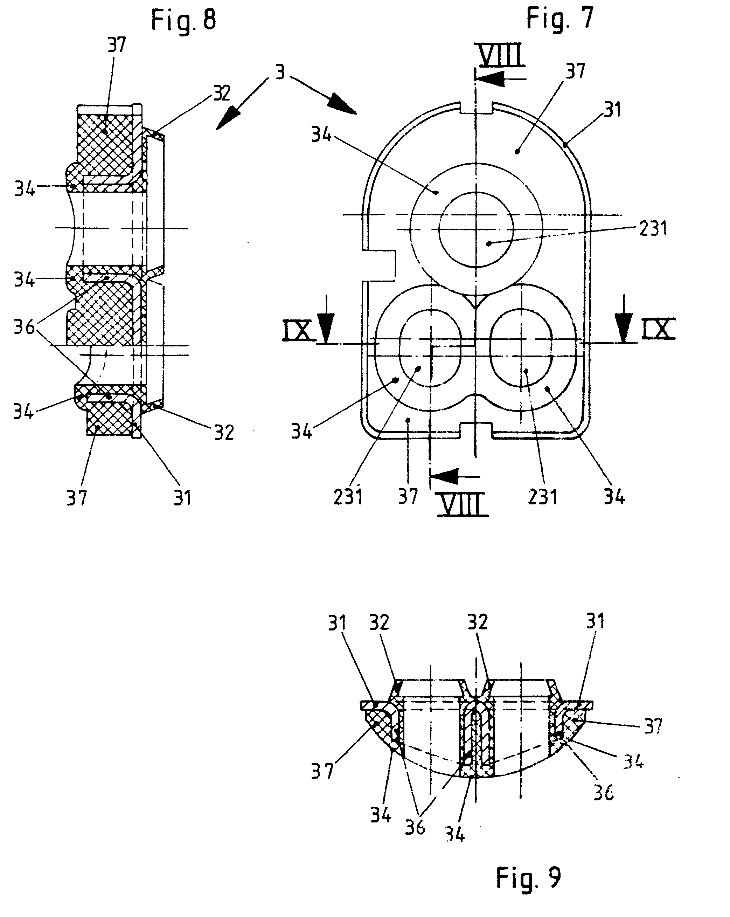

In den Figuren 7 bis 9 der Zeichnung ist ein weiteres Ausführungsbeispiel eines Dichtungsgliedes 3 gezeigt. Die Ausführung der Lippendichtung 32 und der Wulstdichtung 34 entspricht im wesentlichen dem Ausführungsbeispiel gemäss Figur 4 bis 6. Zur Einsparung eines besonderen Formkörpers 24 ist die Wulstdichtung 34 mit einem einstückig angeformten Block 37 versehen. Bei der Montage braucht nunmehr lediglich ein Glied radial in die Mantelfläche eingefügt zu werden. Hierdurch wird u.a. eine weitere Montageerleichterung des Ventils erreicht.

Bei den vorstehend dargestellten Ausführungsformen des Dichtungsgliedes 3 ist die Trägerplatte 31 aus Metall hergestellt, auf dem die einzelnen Dichtelemente oder Glieder aus einem gummiartigen Werkstoff aufvulkanisiert sind.

## Patentansprüche

1. Mischventil, insbesondere sanitäres Mischventil, mit einem in eine Armatur (1) einschiebbaren Kartuschengehäuse (2), in dem aufeinanderliegende Verschlussglieder (22, 23) aus einem Sonderwerkstoff, wie Oxidkeramik, Hartmetall, Kunststoff etc. angeordnet sind, wobei wenigstens ein im Kartuschengehäuse (2) über ein Stellglied bewegbares Verschlussglied (22) und ein feststehendes, Durchtrittsöffnungen für verschiedene Fluide aufweisendes Verschlussglied (23) vorgesehen ist, wobei elastische, von einer Trägerplatte (31) gestützte Dichtungen eine dichte Verbindung zwischen den Durchtrittsöffnungen in dem feststehenden Verschlussglied (23) und den in dem Kartuschengehäuse (2) vorgesehenen Zulauf- und Ablaufkanälen herstellt, dadurch gekennzeichnet, dass an den beiden Flachseiten der Trägerplatte (31) Dichtungen befestigt sind, dass die Trägerplatte (31) mit einer Flachseite an einem Anschlag (25) des Kartuschengehäuses (2) anliegt, dass die Trägerplatte (31) senkrecht auf den Berührungsflächen der Verschlussglieder (22, 23) in das Kartuschengehäuse (2) einschiebbar ist, dass die am feststehenden Verschlussglied (23) anliegenden Dichtungen als Lippendichtungen (32) ausgebildet sind und Fluidaufschlagflächen (33) zur variablen hydraulischen Anpressung der Verschlussglieder (22, 23) umschliessen, dass die erforderliche Mindestanpresskraft der Verschlussglieder (22, 23) unmittelbar durch Verformung der Lippendichtungen (32) erzeugt ist, und dass die Lippendichtungen (32) mit nach den Durchtrittsöffnungen (231) der Trägerplatte (31) geneigten Dichtlippen ausgebildet sind.

2. Mischventil nach Anspruch 1, dadurch gekennzeichnet, dass die an der von dem feststehenden Verschlussglied (23) abgekehrten Seite der Trägerplatte (31) befestigte Dichtung lippen- oder wulstförmig ausgebildet ist.

3. Mischventil nach den Ansprüchen 1 und 2, dadurch gekennzeichnet, dass die Dichtungen auf der Trägerplatte (31) aufvulkanisiert sind.

4. Mischventil nach den Ansprüchen 1 bis 3, dadurch gekennzeichnet, dass die wulstförmigen Dichtungen (34) von einem Formkörper (24) radial umgeben und abgestützt sind.

5. Mischventil nach den Ansprüchen 1 bis 4, dadurch gekennzeichnet, dass die wulstförmigen Dichtungen (34) auf der Trägerplatte (31) aufstossende Rohrstutzen (35) zur Formung der Durchtrittsöffnungen (231) haben.

6. Mischventil nach den Ansprüchen 1 bis 4, dadurch gekennzeichnet, dass an der Trägerplatte (31) angeformte Stützringe (36) ausgebildet sind, die die wulstförmigen Dichtungen (34) halten.

7. Mischventil nach den Ansprüchen 1 bis 3 und 6, dadurch gekennzeichnet, dass die radiale Abstützung der wulstförmigen Dichtungen (34) von den Stützringen (36) zusammen mit einem einstückig mit den Dichtungen hergestellten und entsprechend geformten Block (37) erfolgt.

**Revendications**

1. Soupape mélangeuse, notamment soupape mélangeuse pour appareil sanitaire comportant un boîtier (2) susceptible d'être glissé dans un robinet (1), et qui comporte des éléments de fermeture (22, 23) superposés en un matériau particulier tel qu'une céramique à base d'oxyde, d'un métal dur, d'une matière synthétique etc., avec au moins un élément de fermeture (22) susceptible d'être déplacé par l'intermédiaire d'un organe de réglage et un élément de fermeture (23) fixe comportant des orifices de passage pour différents fluides étant logé dans le boîtier (2), des joints d'étanchéité, élastiques, appuyés sur une plaque de support (31) réalisant une liaison étanche entre les orifices de passage de l'élément de fermeture (23) fixe et les canaux d'arrivée et de sortie prévus dans le boîtier (2), caractérisée en ce que les joints d'étanchéité sont fixés sur les deux grands côtés de la plaque de support (31), cette plaque de support (31) s'appuyant par un grand côté contre une butée (25) du boîtier (2), la plaque de support (31) pouvant se glisser dans le boîtier (2) perpendiculairement par rapport aux surfaces de contact des organes de fermeture (22, 23), les joints appliqués contre l'élément de fermeture (23) fixe étant des joints à lèvres (32) et entourent des surfaces d'appui fluiidiques (33) pour presser de manière hydraulique, variable, les éléments de fermeture (22, 23), en ce que la force d'application minimale nécessaire des éléments de fermeture (22, 23) étant engendrés directement par la déformation des joints à lèvres (32) comportent des lèvres d'étanchéité inclinées vers les orifices de passage (231) de la plaque du support (31).

2. Soupape mélangeuse selon la revendication 1, caractérisée en ce que le joint fixé sur le côté de la plaque de support (31) non tournée vers l'élément de fermeture fixe (23) est un joint en forme de lèvre ou de bourrelet.

3. Soupape mélangeuse selon les revendications 1 et 2, caractérisée en ce que les joints sont vulcanisés sur la plaque de support (31).

4. Soupape mélangeuse selon les revendications 1 à 3, caractérisée en ce que les joints en forme de bourrelet (34) sont entourés radialement et appuyés par un organe de forme (24).

5. Soupape mélangeuse selon les revendications 1 à 4, caractérisée en ce que les joints (34) en forme de bourrelet ont des ajutages tubulaires (35) sur la plaque de support (31) pour former les orifices de passage (231).

6. Soupape mélangeuse selon les revendications 1 à 4, caractérisée par des bagues d'appui (36) formées sur la plaque de support (31) et qui maintiennent les joints (34) en forme de bourrelet.

7. Soupape mélangeuse selon les revendications 1 à 3 et 6, caractérisée en ce que l'appui radial des joints en forme de bourrelet (34) est réalisé par les anneaux d'appui (36) en une seule pièce avec les joints d'étanchéité et le bloc (37) de forme correspondante.

**Claims**

1. Mixer valve, especially a sanitary mixer valve, having a module housing (2) which can be inserted in a fixture (1) and in which are arranged closure members (22, 23) that rest against one another and are made of a special material, such as oxide ceramics, hard metal, plastics, etc., there being provided at least one closure member (22) that can be moved in the module housing (2) via an adjusting member and a closure member (23) that is fixed and has openings for various fluids, resilient seals supported by a support plate (31) forming a leak-proof connection between the openings in the fixed closure member (23) and the inlet and outlet channels provided in the module housing (2), characterised in that seals are fastened to the two flat sides of the support plate (31), one flat side of the support plate (31) rests against a stop (25) in the module housing (2), the support plate (31) can be introduced into the module housing (2) perpendicular to the contact surfaces of the closure members (22, 23), the seals resting against the fixed closure member (23) are in the form of lip seals (32) and enclose fluid-impact surfaces (33) for the variable hydraulic pressing of the closure members (22, 23), the minimum pressure required for the closure members (22, 23) is produced directly by deformation of the lip seals (32), and the lip seals (32) are constructed with sealing lips inclined towards the openings (231) in the support plate (31).

2. Mixer valve according to claim 1, characterised in that the seal fastened to the side of the support plate (31) remote from the fixed closure member (23) is lip-shaped or toric.

3. Mixer valve according to claims 1 and 2, characterised in that the seals are vulcanised onto the support plate (31).

4. Mixer valve according to claims 1 to 3, characterised in that the toric seals (34) are radially surrounded and supported by a shaped body (24).

5. Mixer valve according to claims 1 to 4, characterised in that the toric seals (34) have connecting sleeves (35) that rest against the support plate (31) in order to shape the openings (231).

6. Mixer valve according to claims 1 to 4, characterised in that there are provided support rings (36) formed on the support plate (31), which hold the toric seals (34).

7. Mixer valve according to claims 1 to 3 and 6, characterised in that the toric seals (34) are supported radially by means of the support rings (36) together with a suitably shaped block (37) manufactured as one piece with the seals.

Fig. 1

# Fig. 2

# Fig. 3

Fig. 5

Fig. 4

Fig. 6

## Fig. 8

## Fig. 7

## Fig. 9